(19) Europäisches Patentamt
European Patent Office
Office européen des brevets

(11) **EP 1 930 194 B1**

(12) **EUROPEAN PATENT SPECIFICATION**

(45) Date of publication and mention
of the grant of the patent:
**08.02.2012 Bulletin 2012/06**

(51) Int Cl.:
***B60J 5/04*** (2006.01)

(21) Application number: **06125579.0**

(22) Date of filing: **07.12.2006**

(54) **Vehicle door**

Fahrzeugtür

Portière de véhicule

(84) Designated Contracting States:
**DE GB SE**

(43) Date of publication of application:
**11.06.2008 Bulletin 2008/24**

(73) Proprietor: **Volvo Car Corporation**
**405 31 Göteborg (SE)**

(72) Inventors:
• **MATTSSON, Ingemar**
**SE-375 90, Mörrum (SE)**
• **FURUNGER, Robert**
**SE-444 60, Stora Höga (SE)**
• **GRAPENGIESSER, Sofia**
**SE-435 37, Mölnlycke (SE)**
• **JONASON, Paul**
**SE-442 75, Lycke (SE)**
• **LARSSON, Karl-Erik**
**SE-376 37, Svängsta (SE)**

• **PÜSCHL, Barbara**
**SE-294 31, Sölvesborg (SE)**
• **ROSENBERG, Anna**
**SE-293 73, Jämshög (SE)**
• **RUTGERSSON, Gunnar**
**SE-422 49, Hisings Backa (SE)**
• **STRÖM, Mats**
**SE-441 63, Alingsås (SE)**
• **THOMASSON, Maths**
**SE-374 51, Asarum (SE)**

(74) Representative: **VALEA AB**
**Lindholmspiren 5**
**417 56 Göteborg (SE)**

(56) References cited:
DE-A1- 10 014 928        DE-A1- 10 313 706
DE-A1- 10 355 932        DE-A1-102005 016 916
JP-A- 2006 151 165       US-A1- 2003 067 187

EP 1 930 194 B1

## Description

## Field of the invention

The present invention relates to vehicle doors, for example to vehicle doors which are fabricated to reduce occurrence of corrosion therein. Moreover, the present invention also relates to methods of reducing corrosion in vehicle doors.

## Background of the invention

Corrosion in vehicle bodies is a well known problem and considerable research has been undertaken in recent years to develop methods of reducing such corrosion in vehicle bodies. Such methods take into account a need for vehicle body manufacture to be cost effective, for car bodies to be sufficiently robust to protect corresponding vehicle occupants in impact events, for car bodies to dampen vehicle noise and vibration, as well as taking into account that the car bodies need eventually to be susceptible to being recycled. Steel panels have conventionally been employed in fabricating vehicle bodies because of their mechanical strength, ease of working in manufacture by way of extruding using pressing and hydroforming operations, and also their property of being easily recycled. Various methods of applying paint, special paint formulations and galvanizing processes have been hitherto employed to try to reduce problems associated with corrosion of steel panels and similar.

More recently, it has been appreciated within the automotive industry that reduced vehicle weight is an important aspect in order to reduce vehicle fuel consumption. Energy used in propelling a vehicle is partially expended overcoming rolling resistance of vehicle tyres and also in raising vehicle potential energy against gravity when traveling up-hill. It is known that vehicle body weight can be reduced significantly by the use of plastics material components in vehicle bodies. Plastics material components also have a benefit that they are generally not susceptible to suffering corrosion. However, not all component parts of vehicle bodies are beneficially suited to being implemented as plastics material components, either on grounds of unfavorable manufacturing cost or insufficient mechanical strength to cope with impact events.

Vehicle doors are critical component parts of vehicle bodies. Not only must they be robust to resist vehicular lateral impact events, but must be implemented in such a manner to enable passenger access into their vehicles, and beneficially they must not jam in closed position in vehicular frontal impact events so that passenger and driver access into and out of corresponding vehicles remains possible. In view of such performance requirements, it has not been found practical to fabricate vehicle doors from plastics materials, other than inside decorative trim of the doors and various movable mechanical components such as window mechanisms.

US 2003/0067187 describes an open hem flange for a vehicle door including an inner reinforcing panel and an outer panel having a first outer portion and a second inner portion folded about the inner panel at a base. The inner reinforcing panel includes dimpled sections against the second outer portion which provides a gap between the inner panel and the second inner portion of the outer.

DE10 2005 016 916 describes a vehicle body component comprising a first sheet panel and a second sheet panel which is folded about the first sheet panel, and connected via a welded joint.

It is well known that aluminium (Al) is less dense than steel, is mechanically strong and is less susceptible to corrosion in comparison to other metals. Moreover, aluminium is a ductile metal and aluminium sheet can be economically rolled and formed into various complicated shapes. Vehicle road vehicle manufacturers such as Land Rover in the United Kingdom have employed aluminium substantially-planar body panels for many years in their robust products, for example off-road vehicles. However, it is not general practice within vehicle manufacture to employ aluminium body panels for vehicles, especially for saloon-type vehicles where vehicle body appearance is an important factor for users.

In view of increases in vehicle fuel costs and a corresponding need to improve vehicle fuel efficiency, the use of aluminium and plastic materials in vehicle body manufacture has become increasingly relevant to vehicle designers. However, it is not generally well appreciated that aluminium is also susceptible to suffering corrosion, especially when used in combination with other metals. Surface pitting in aluminium-alloy vehicle wheels in response to salt scattered on roads in winter is a well known phenomenon. In contemporary vehicles, doors of such vehicles are also prone to being exposed to water from rain as well as potentially salt spread in winter. Vehicle doors fabricated from aluminium have hitherto therefore been unattractive to vehicle designers; steel panels are conventionally therefore employed when fabricating vehicle doors.

Thus, the present invention is concerned with a technical problem of reducing vehicle weight, whilst simultaneously addressing issues of mechanical strength to resist impact events and corrosion resistance.

## Summary of the invention

An object of the present invention is to provide a vehicle door which weighs less, is mechanically robust to at least partially resist impact events and is less susceptible to suffering corrosion.

According to a first aspect of the present invention, there is provided a vehicle door in accordance with claim 1.

The invention is of advantage in that the door is less susceptible to corrosion in operation along the region of the bottom edge.

Implementing the panels substantially in a spaced apart configuration at the bottom edge enables mutually different metals to be used whilst at least partially circumventing a risk of corrosion, thereby potentially enabling the weight of the door to be reduced.

Preferably, the vehicle door is implemented such that the one or more elongate apertures have a combined elongate length which is more than 75% of a length of the bottom edge of said door. Such an implementation is susceptible to provide especially beneficial corrosion protection whilst still providing adequate mechanical strength. Yet more preferably, for providing superlative ventilation, the one or more elongate apertures of the door have a combined elongate length which is more than 90% of a length of the bottom edge of the door.

Preferably, the vehicle door is implemented so that the inner panel extends downwards a distance at the bottom edge beyond that of the outer panel when the door is in its operating orientation. Alternatively, the vehicle door is preferably implemented so that the outer panel extends downwards by a distance at the bottom edge beyond that of the inner panel when the door is in its operating orientation.

Preferably, the vehicle door is devoid of any form of hemming joint. Thus, in accordance with the invention, the vehicle door is implemented so that the one or more attachment regions at the bottom edge are each implemented solely as two planar substantially abutting surfaces mutually fixating the outer panel and inner panel together. More preferably, to provide efficient and cost-effective manufacture, the panels are mutually fixated together at the one or more attachment regions by one or more of: soldering, brazing, riveting, gluing, inert gas welding, spot resistance welding, laser welding, screwing, clamping.

Preferably, the vehicle door is implemented such that the one or more attachment regions include additional protection against corrosion, the additional protection including one or more of:

(a) shimming inserted between the panels, such shimming including one or more of: plastics material shimming, one or more adhesive sheet layers, one or more synthetic rubber layers which are preferably substantially carbon-free, one or more inert material layers; and

(b) applying special adhesive protective coatings, protective paint coatings, electroplating treatments such as substantially inert metal plating, for example gold plating.

More preferably, to provide desirable galvanometric isolation, the shimming has a thickness in a range of 0.5 mm to 5 mm, more preferably in a range of 1 mm to 3 mm.

In order to provide enhanced corrosion protection at the one or more attachment regions, the vehicle door is implemented so that the one or more attachment regions are formed so as to provide an upper apex with downwardly-directed surfaces for guiding water away from the apex in operation.

Preferably, the vehicle door further includes a protective element substantially along the bottom edge. The protective element is of benefit in that it is capable of protecting the bottom edge from damage, for example bending impacts, scratches and dents.

Preferably, the vehicle door is adapted to function as a front door, rear door or hatch door of a vehicle.

According to a second aspect of the invention, there is provided a method of providing for drainage and ventilation in a region of a bottom edge of a vehicle door in accordance with claim 10.

According to a third aspect of the invention, here is provided a vehicle including one or more doors according to the first aspect of the invention; the one or more doors are fabricated pursuant to a method according to the second aspect of the invention.

It will be appreciated that features of the invention are susceptible to being combined in any combination without departing from the scope of the invention as defined by the accompanying claims.

**Description of the diagrams**

Embodiments of the invention will now be described, by way of example only, with reference to the following diagrams wherein:

Figure 1          is a side view of a known vehicle door;

Figures 2a, 2b    are cross-sectional illustrations of a hemming joint employed along a lower edge of the door in Figure 1;

Figure 3          is a view of a lower edge of a vehicle door constituting an embodiment of the present invention, the view including cross-sectional axes A-A and B-B and a schematic underside view therebelow;

Figure 4          is a cross-sectional view along the cross-sectional axis A-A in Figure 3;

Figure 5          is a cross-sectional view along the cross-sectional axis B-B in Figure 3;

Figure 6          is a cross-sectional view of the lower edge of the door of Figure 3 provided with a plastics material protective element, for example protective strip;

Figure 7          is a view of a lower edge of a vehicle door constituting an embodiment of the present invention, the view including locating features for use in aligning sheets constituting the vehicle door during its manufacture; and

Figure 8 is a perspective view of a rear side of the vehicle door in Figure 7 with an inset illustrating joining of inside and outside panels of the door.

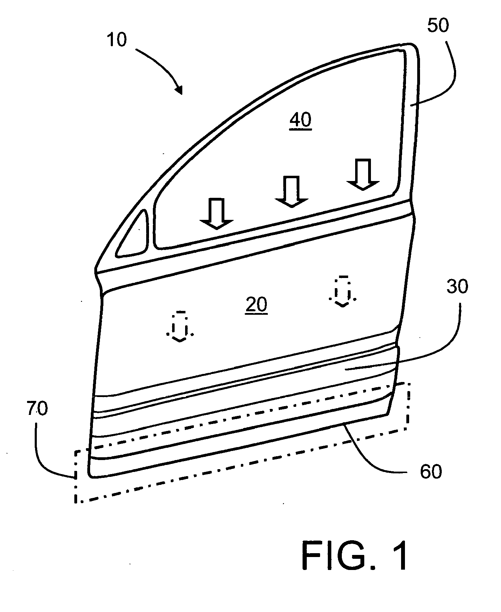

In Figures 1 to 8, numerals are included to identify features in conjunction with the following description of embodiments of the invention. The numerals are included underlined when spatially positioned within features to which they relate. Moreover, the numerals when not underlined are linked by lines which identify features to which the numerals relate. Furthermore, numerals are linked by arrows when they are used to indicate a complete component part or system.

**Description of embodiments of the invention**

In overview, the present invention relates to vehicle doors and to methods of fabricating such doors. In Figure 1, there is shown an example of a contemporary vehicle door indicated generally by 10. The vehicle door 10 comprises an outside door panel 20 optionally provided with protective trim 30 at a lower region thereof for protecting against scratches and dents in use. Moreover, the door 10 includes a window 40 at an upper region thereof; the window 40 is optionally operable to be slid up and down relative to the outside door panel 20 by way of manual actuation and/or by way of a motor (not shown) included behind the outer door panel 20. The door 10 includes a frame 50 at its upper region for providing peripheral protection for the window 40. A bottom edge of the door 10 is denoted by 60. Optionally, the frame 50 is omitted.

In operation, the vehicle door 10 is periodically exposed to snow, rain, fog and/or other sources of moisture which cause water to collect on an exposed surface of the window 40 and flow as represented by arrows to a lower portion of the door 10, the lower potion being denoted by 70 in Figure 1. Unless the water is adequately ducted from the lower portion 70, the water collected at the lower portion 70 is susceptible to causing corrosion, especially when the door 10 is fabricated using steel panels. Such corrosion is found in practice to be exacerbated when capillary flow of the collected water occurs in the lower portion 70 as will be elucidated in greater detail later.

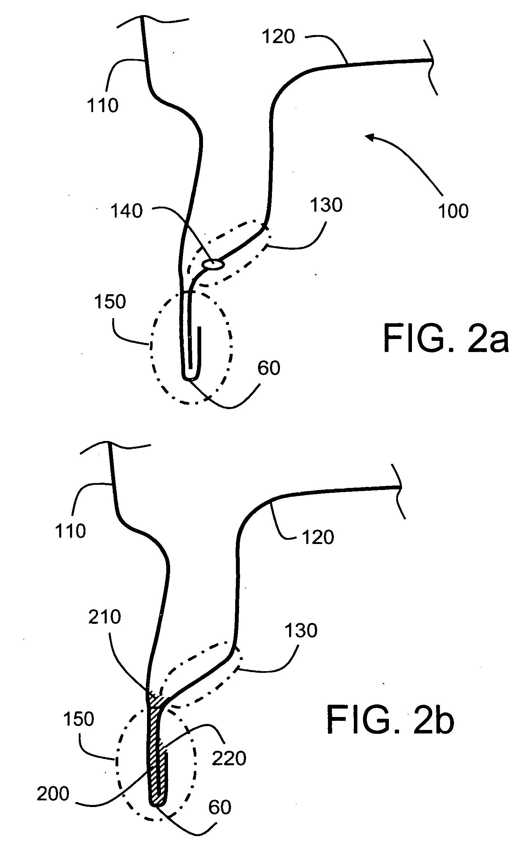

In Figures 2a and 2b, cross-sectional views of the door 10 at the lower portion 70 including the edge 60 are shown and indicated by 100. The outside door panel 20 is implemented by using a first formed steel sheet denoted by 110. Moreover, an inside door panel (not shown in Figure 1) is formed from a second formed steel sheet denoted by 120. At the lower edge 60, there is formed a "hemming" joint denoted by 150. The hemming joint 150 is formed by bending the first steel sheet 110 around a lower edge of the second steel sheet 120 as illustrated. Such bending of the first steel sheet 110 creates a lower ridge at the lower edge 60 whereat the water and moisture can collect and cause corrosion generally in a region of the hemming joint 150. Additionally, such corrosion often appears aesthetically unsightly, and also potentially structurally weakens the door 10 to resist impact events. In order to address such corrosion, it is conventional design practice to include one or more holes 140 in a region 130 of the second steel sheet 120 immediately above the hemming joint 150 so that water is drained from the door 10 in operation. Moreover, in order to increase strength of the door 10, the hemming joint 150 is filled with adhesive, hydrophobic wax, paint and/or filler denoted by 200. Optionally, the adhesive, wax, paint and/or filler 200 extends outside the hemming joint 150 as denoted by 210, 220 whereat the sheets 110, 120 are folded together to further increase strength of the door 10 and resist water ingress susceptible to causing corrosion of the hemming joint 150.

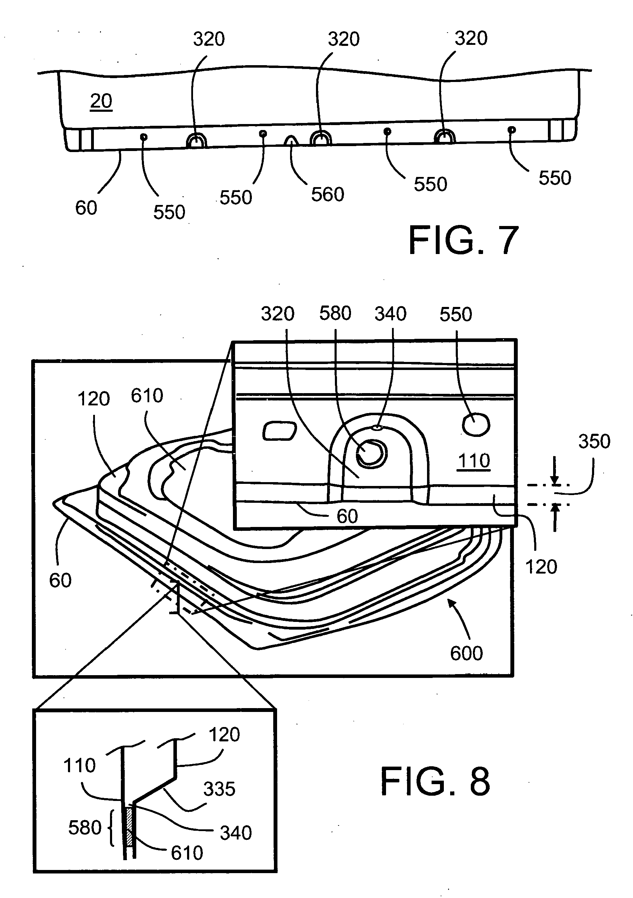

Inclusion of the one or more holes 140 is disclosed in earlier literature, for example in Figure 8 of a published United States patent no. US 6, 412, 852, and in Figures 1 to 6 of a published Japanese patent no. JP60248429.

Although the hemming joint 150 as described in the foregoing is mechanically strong, cost effective to manufacture and initially visually aesthetically pleasing, water is susceptible to penetrating into the hemming joint 150 by capillary action over a longer period of time, for example several years after date of manufacture of the door 10, causing the hemming joint 150 to corrode and eventually fail. Such capillary ingress of moisture occurs despite inclusion of the one or more drainage holes 140 in the region 130. Galvanizing the panels 110, 120 is a conventional approach which has been adopted to reduce corrosion occurring in the hemming joint 150.

As elucidated earlier, the use of materials other than steel in vehicle manufacture has been of interest to the automotive industry for many years. Plastics material components are employed in increasing numbers in contemporary vehicles, for example to offset the weight of ancillary equipment such as air-conditioning units, electric window actuating motors, loud-speakers and so forth. However, on account of vehicle doors being required to be mechanically strong to resist lateral impact events, it has been contemporary practice to fabricate vehicle doors substantially from steel structural components.

In devising the present invention, it has been appreciated that aluminium (Al) is a material which is desirable to employ in future vehicles. Aluminium is perceived to be of benefit in that it is of lighter weight than steel, is perceived to be less susceptible to corrosion in comparison to steel and can be conveniently pressed or extruded into various shapes. However, this conventional perception regarding corrosion is incorrect when aluminium is employed in conjunction with other metals. For example, aluminium abutting onto steel is susceptible to suffering corrosion on account of unintentionally forming an electrochemical cell in the presence of moisture providing for the movement of anions and cations between the aluminium and steel. Although aluminium is susceptible to spontaneously forming a protective oxide layer thereupon when exposed to oxygen gas in air, the protective oxide layer is susceptible to being penetrated by anions and cations.

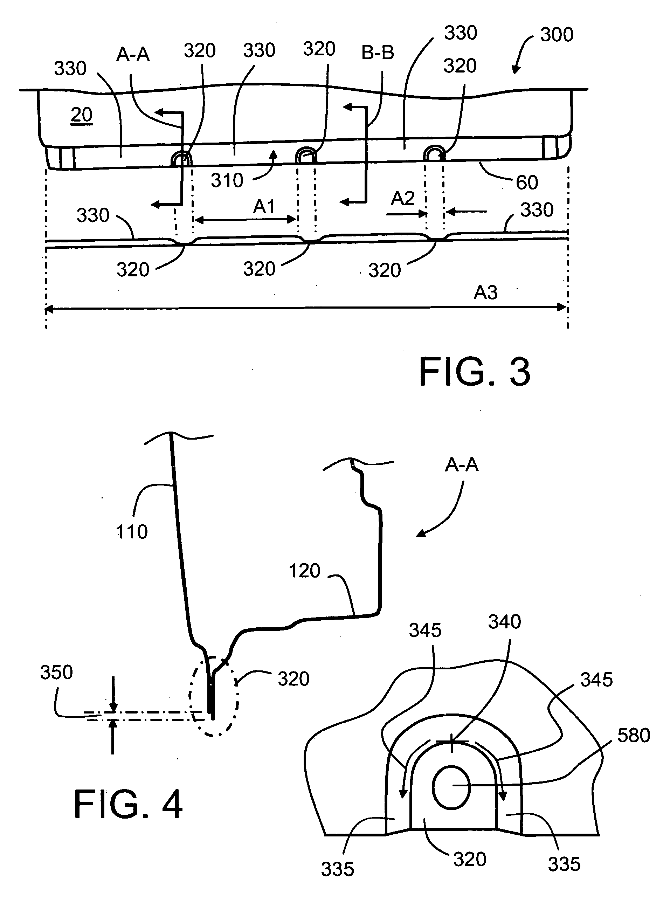

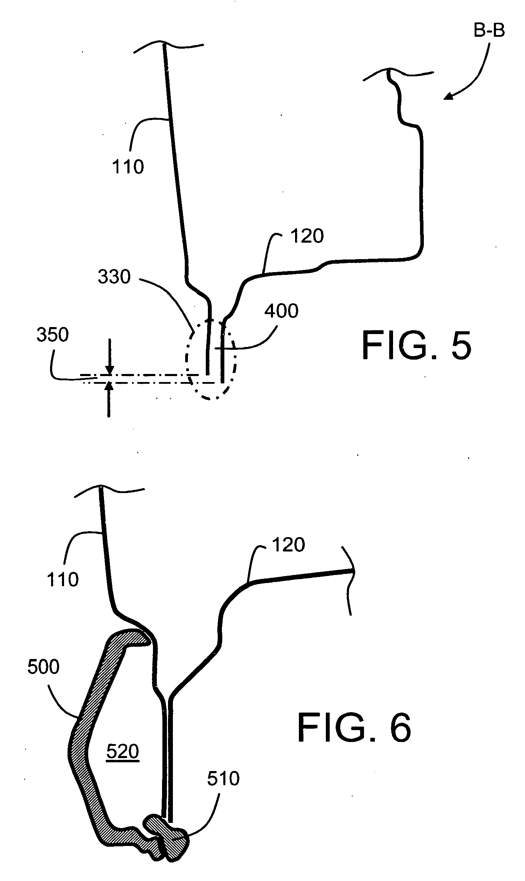

In an embodiment of a door pursuant to the present invention, the door has a form similar to the door 10 illustrated in Figure 1 subject to certain modifications. The modifications concern, for example, implementing the first sheet 110 from aluminium (aluminum) (Al) and the second sheet 120 from steel; the sheets 110, 120 are also conveniently referred to as being panels. However, the hemming joint 150 in not utilized at the lower portion 70 in the door pursuant to the present invention as will now be elucidated with reference to Figure 3. The lower portion 70 implemented pursuant to the present invention is indicated generally by 300. The lower portion 300 has the first sheet 110 implemented in aluminium (aluminum) (Al) and the second sheet 120 implemented in steel, the sheets 110, 120 being continued to unfolded lower edges as illustrated in Figures 4 and 5 to form the lower edge 60. In Figure 3, in a bottom region indicated generally by 310, the sheets 110, 120 are in a mutually spaced-apart configuration as depicted in Figure 5 in a surrounding region 330 of the bottom region 310 to form elongate drainage and ventilation apertures 325, and are in a mutually abutting configuration as depicted in Figure 4 in fixing regions 320 of the bottom region 310. The elongate apertures 325 preferably have a transverse width which is in a range of 0.5 mm to 10 mm, more preferably in a range of 1 mm to 5 mm; such transverse width is a compromise between providing adequate ventilation and drainage whilst avoiding the apertures 325 becoming clogged with debris during operation over many years. In Figure 3, a cross-sectional axis A-A is shown across one of the fixing regions 320, and a cross-section axis B-B is shown across the surrounding region 330.

A parameter A1 denotes an elongate length of each aperture 325 along the bottom region 310. Moreover, a parameter A2 denotes an elongate length of the fixing regions 320. Furthermore, a length A3 denotes a length of the bottom region 310. A parameter ΣA1 denotes a summation of the lengths of all apertures 325 included in the bottom region 310. Beneficially, in order to ensure that the sheets 110, 120 are mutually spaced apart to reduce occurrence of corrosion therebetween whilst concurrently also ensuring that the bottom region 310 is sufficiently mechanically strong to resist impact events, a ratio $\frac{\sum A1}{A3}$ is preferably more than 0,5, more preferably more than 0.75, most preferably more than 0.9; in percentages, such ratios correspond to 50%, 75% and 90% respectively. Moreover, a parameter $\Sigma A2$ de-

notes a summation of the lengths of all fixing regions 320 included in the bottom region 310. A ratio $\frac{\sum A2}{A3}$ is beneficially greater than 0,03, and more beneficially greater than 0.05 to ensure sufficient mechanical strength to the door pursuant to the present invention; such ratios correspond to 3% and 5% respectively.

Referring to Figure 4, a view of the first and second sheets 110, 120 respectively across the cross-sectional axis A-A is shown. The second sheet 120 is folded at its lower portion to form a substantially horizontal portion in use followed by a further downwards fold to the fixing region 320. The first sheet 110 is folded slightly as illustrated prior to reaching the aforesaid fixing region 320. As shown, the first sheet 110 is terminated a distance 350 above where the second sheet 120 is terminated. The distance 350 is preferably less than 10 mm, more preferably less than 5 mm, and most preferably less than 3 mm. Moreover, the distance 350 is preferably greater than 1 mm, and most preferably greater than 2 mm. At the fixing region 320, the sheets mutually abut and can be fixated together by various processes, for example one or more of: soldering, brazing, riveting, gluing, inert gas welding, spot welding, laser welding, screwing, clamping to mention a few examples. The fixing region 320 preferably has a height upwards from the bottom edge 60 greater than 10 mm, more preferably greater than 25 mm, and most preferably greater than 50 mm.

Alternatively, the first sheet 110 is terminated a distance 350 below where the second sheet 120 is terminated, so that a bottom edge of the second sheet 120 is fully obscured from external view by the first sheet 110. As a further alternative, the first sheet 110 and the second sheet 120 are terminated at substantially similar positions so that the distance 350 is substantially zero.

The fixing region 320 is shown in front view as an inset in Figure 4. The fixing region 320 includes a formed profile 335 leading thereto resulting in formation of a singular apex point 340 which is operable to guide water away therefrom via the formed profile 335 as denoted by arrows 345 when the door 10 is in operation and implemented pursuant to the present invention. Although the fixing region 320 can be implemented so that its upper portion is of generally semicircular form, it will be appreciated that other forms can be optionally employed, for example: a substantially linearly tapered form widening out from the apex 340 towards the bottom edge 60,

Referring next to Figure 5, a view of the first and second sheets 110, 120 respectively across the cross-sectional axis B-B is shown. The sheets 110, 120 are formed in a similar manner as illustrated in Figure 3 except that a gap 400 is allowed to remain between the sheets 110, 120 in the surrounding region 330 for forming the aforesaid aperture 325. Preferably, the gap 400 is less than 10 mm, more preferably less than 5 mm and most preferably less than 3 mm.

In order to provide further protection to the bottom region 310 and to disguise its unusual implementation pursuant to the present invention, the bottom region 310 optionally includes a protective element 500 therealong, for example as illustrated in Figure 6. Preferably, the protective element 500 faces outwardly so as to be externally visible when the door pursuant to be present invention is in a closed state relative to an associated vehicle on which it is pivotally attached in use. The protective element 500 is preferably fabricated from a non-metallic material, for example from a plastics material; for example, the protective element 500 can be fabricated as a plastics material strip. Beneficially, the protective element 500 is injection molded or formed as an extruded component. Alternatively, it can be press extruded from a polymer sheet or metal sheet, for example from polypropylene sheet or stainless steel metal sheet. Moreover, as illustrated in Figure 6, an upper longitudinal edge of the protective element 500 preferably locates into a cooperating recess edge formed in the first sheet 110. Furthermore, a lower longitudinal edge of the protective element 500 beneficially abuts onto one or more lower edges of the sheets 110, 120, such abutment being either direct or via an intermediate element 510. Optionally, the intermediate element 510 is molded to be an integral part of the protective strip. The protective element 500 is shown to have a curved profile in cross-section which is beneficial to enhance strength of the element 500 whilst ensuring that it is relatively light weight, and also to circumvent forming an interface between the element 500 and the first sheet 110 at which moisture could accumulate by way of capillary action to constitute a risk of initiating corrosion of the first sheet 110. The protection element 500 when installed onto the bottom region 310 therefore defines a cavity 520 as shown.

As shown in Figure 7, the first sheet 110 beneficially includes one or more holes 550 and similar features 560 for use in manipulating and positioning the sheet 110 when being affixed to the second sheet 120 during manufacture of the door pursuant to the present invention. Such one or more holes 550 and features 560 additionally, or alternatively, serve as mounting points for the aforesaid protective element 500. Attachment of the protective element 500 can be achieved by way of resilient clips; the clips are at least one of: additional components included during manufacture, or included in the protective element 500, for example by way of added inserts to the protective strip or integrally molded therewith. The holes 550 are beneficially included at positions along the surrounding region as shown in Figure 7. More preferably, the holes 550 are substantially uniformly distributed along the bottom region 310. Yet more preferably, the holes 550 are included alternately between the fixing regions 320 as shown.

Referring next to Figure 8, a rear view of a door indicated by 600 pursuant to the present invention is provided. The second sheet 120 is fabricated from steel as elucidated in the foregoing and is pressed or otherwise extruded to increase lateral impact strength of the door 600 and impart thereto favorable vibration Eigenmode frequencies; selection of Eigenmode frequencies is desirable in order to ensure that the door 600 exhibits desirable sound and vibration dampening properties when in use. Optionally, the second sheet 120 has a hole 610 formed in substantially a central region thereof to facilitate mounting of window winding mechanisms, for example at least one of manual or motor-actuated winding mechanisms, loudspeakers, ventilation ducts within the door 600 and so forth.

In Figure 8, there is shown inset an enlarged view of one of the fixing regions 320 of the door 600 implemented pursuant to the present invention. One of the holes 550 is shown in the inset to be of a substantially round profile. However, other profiles for the holes 550 are possible, for example rectangular, square, ellipsoidal, triangular, hexagonal, octagonal and so forth. The fixing region 320 preferably includes a sub-region denoted by 580 whereat bonding, welding, joining, fastening and similar is actually achieved between the first and second layers 110, 120 respectively. The sub-region 580 is preferably less than 90% of the fixing region 320, more preferably less than 70% of the fixing region 320, and most preferably less than 50% of the fixing region 320.

Any tendency to corrosion occurring at the fixing regions 320 is susceptible to being addressed by expending special attention to the fixing regions 320 rather than along an entire length of the aforesaid hemming joint 150. Such special attention, when the sheets 110, 120 are fixed together by mechanical components such as rivets or screws, can include shimming 600 inserted between the sheets 110, 120 at the region 320, such shimming 600 can include one or more of: plastics material shimming, one or more adhesive sheet layers, one or more synthetic rubber layers which are preferably substantially carbon-free, one or more inert material layers. An inset in Figure 8 is a cross-section view of the shimming 610. The shimming 610 preferably has a thickness in a range of 0.5 mm to 5 mm, and more preferably in a range of 1 mm to 3 mm. Alternatively, such special attention, when the sheets 110, 120 are fixed together by soldering, brazing, laser welding, resistive heating welding, inert gas welding, or similar can include at least one of the following: applying special adhesive protective coatings, protective paint coatings, electroplating treatments such as substantially inert metal plating, for example gold plating, anodizing, to mention a few examples.

The present invention represents a radical departure from known approaches to reduce corrosion occurring in vehicle doors. Employing a relatively open implementation for the bottom edge 60 would conventionally seem highly undesirable on grounds of mechanical strength to impact events, and sound and vibration dampening characteristics. However, surprisingly, the door pursuant to the present invention is susceptible to being implemented to satisfy contemporary safety requirements whilst remaining in use less prone to suffering corrosion and thus aesthetically being more acceptable to users.

It will be appreciated that doors fabricated pursuant to the present invention, for example as illustrated in Figures 3 to 8, are susceptible to being adapted to function as front doors, rear doors and even back-hatch doors of road vehicles. Aeration and superlative drainage of water, moisture and condensate in the surrounding region 330 assists to reduce occurrence of unsightly corrosion. Moreover, the fixing regions 320 can be specially treated to avoid corrosion threat rather than having to need to treat a whole longitudinal length of the bottom portion 70 which is contemporarily required.

It will be appreciated that modifications to embodiments of the invention described in the foregoing are possible without departing from the scope of the invention as defined by the accompanying claims.

Although embodiments of doors pursuant to the present invention are described in foregoing as including the first and second sheets 110, 120 implemented in aluminium (aluminum) and steel respectively, other combinations of metal for these sheets 110, 120 is possible. For example, the first sheet 110 can be implemented in aluminium and the second sheet 120 can be implemented in stainless steel. Alternatively, the first sheet 110 can be implemented in stainless steel and the second sheet 120 can be implemented in titanium (Ti).

Reference numerals included within parentheses in the claims are intended to assist understanding of the subject matter claimed in the claims, and are not to be construed to be limiting the scope of the claims. Reference to the singular is also to be construed to relate to the plural.

Terms used in describing and claiming the present invention such as "include", "comprise", "consist of", "have", "are", "incorporate", are to be construed in a non-exclusive manner, namely to allow for other parts or components to be present which are not explicitly indicated.

**Claims**

1. A vehicle door (600) comprising an outer panel (110) and an inner panel (120), said panels (110, 120) being mutually adjoined to form a three-dimensional structure for the door (600), wherein
the panels (110, 120) are mutually attached together along a bottom edge (60, 310) of said door (600) at one or more attachment regions (320) and said panels (110, 120) between said one or more attachment regions (320) are disposed in a substantially spaced apart manner so as to form one or more elongate drainage and ventilation apertures (325) in a region of said bottom edge (60, 310), said one or more elongate apertures (325) having a combined elongate length which is more than 50% of a length of said bottom edge (60, 310) of said door (600), **characterised in that** said one or more attachment regions (320) at said bottom edge (60, 310) are each implemented solely as two planar substantially abutting surfaces mutually fixating the outer panel (110) and inner panel (120) together.

2. A vehicle door (600) as claimed in claim 1, wherein said one or more elongate apertures (325) have a combined elongate length which is more than 75% of a length of said bottom edge (60, 310) of said door (600).

3. A vehicle door (600) as claimed in claim 1, wherein said one or more elongate apertures (325) have a combined elongate length which is more than 90% of a length of said bottom edge (60, 310) of said door (600).

4. A vehicle door (600) as claimed in any one of the preceding claims, wherein said inner panel (120) extends downwards a distance (350) at the bottom edge (60) beyond that of the outer panel (110) when said door (600) is in its operating orientation.

5. A vehicle door (600) as claimed in any one of the preceding claims, wherein said outer panel (110) extends downwards by a distance (350) at the bottom edge (60) beyond that of the inner panel (120) when said door (600) is in its operating orientation.

6. A vehicle door (600) as claimed in any one of the preceding claims, wherein said panels (110, 120) are mutually fixated together at said one or more attachment regions (320) by one or more of: soldering, brazing, riveting, gluing, inert gas welding, spot resistance welding, laser welding, screwing, clamping.

7. A vehicle door (600) as claimed in any one of the preceding claims, wherein said one or more attachment regions (320) include additional protection against corrosion, said additional protection including one or more of:

    (a) shimming inserted between the panels (110, 120), such shimming including one or more of: plastics material shimming, one or more adhesive sheet layers, one or more synthetic rubber layers which are preferably substantially carbon-free, one or more inert material layers; and
    (b) applying special adhesive protective coatings, protective paint coatings, electroplating treatments such as substantially inert metal plating, for example gold plating.

8. A vehicle door (600) as claimed in claim 7, wherein said shimming (610) has a thickness in a range of 0.5 mm to 5 mm, more preferably in a range of 1 mm to 3 mm.

9. A vehicle door (600) as claimed in any one of the preceding claims, wherein said one or more attachment regions (320) are formed so as to provide an upper apex (340) with downwardly-directed surfaces (335) for guiding water away from the apex (340) in operation.

10. A method of providing for drainage and ventilation in a region of a bottom edge (60, 310) of a vehicle door (600), said method comprising steps of:

(a) fabricating an outer panel (110) and an inner panel (120), said panels (110, 120) when mutually attached being adapted to form a three-dimensional structure for said door (600); and
(b) mutually attaching together said panels (110, 120) together along a bottom edge (60, 130) of said door (600) at one or more attachment regions (320), wherein said one or more attachment regions (320) at said bottom edge (60, 310) are each implemented solely as two planar substantially abutting surfaces mutually fixating the outer panel (110) and inner panel (120) together so that said panels (110,120) between said one or more attachment regions (320) are disposed in a substantially spaced apart manner so as to form one or more elongate drainage and ventilation apertures in a region of said bottom edge (60, 310), said one or more elongate apertures having a combined elongate length which is more than 50% of a length of said bottom edge (60, 130) of said door (600).

11. A method as claimed in claim 10, wherein said one or more elongate apertures have a combined elongate length which is more than 75% of a length of said bottom edge (60, 130) of said door (600).

12. A method as claimed in claim 10, wherein said one or more elongate apertures have a combined elongate length which is more than 90% of a length of said bottom edge (60, 130) of said door (600).

13. A method as claimed in any one of claims 10 to 12, said method including a step of fabricating said panels (110, 120) so that said inner panel (120) extends downwards a distance (350) at the bottom edge (60) beyond that of the outer panel (110) in said door (600) when said door (600) is in its operating orientation.

14. A method as claimed in any one of claims 10 to 12, said method including a step of fabricating said panels (110, 120) so that said outer panel (110) extends downwards by a distance (350) at the bottom edge (60) beyond that of the inner panel (120) in said door (600) when said door (600) is in its operating orientation.

15. A method as claimed in any one of claims 10 to 14, wherein said panels (110. 120) are mutually fixated together at said one or more attachment regions (320) by one or more of: soldering, brazing, riveting, gluing, inert gas welding, spot resistance welding, laser welding, screwing, clamping.

16. A method as claimed in any one of claims 10 to 15, wherein said one or more attachment regions (320) are formed so as to provide an upper apex with downwardly-directed surfaces for guiding water away from the apex in operation.

17. A method as claimed in claim 15, wherein said method includes a step of including additional protection against corrosion at said one or more attachment regions (320), said additional protection including one or more of:

(a) shimming inserted between the panels (110, 120), such shimming including one or more of: plastics material shimming, one or more adhesive sheet layers, one or more synthetic rubber layers which are preferably substantially carbon-free, one or more inert material layers; and
(b) applying special adhesive protective coatings, protective paint coatings, electroplating treatments such as substantially inert metal plating, for example gold plating.

18. A vehicle including one or more doors (600) as claimed in claim 1, said one or more doors (600) being fabricated according to a method as claimed in claim 10.

**Patentansprüche**

1. Eine Fahrzeugtür (600), umfassend ein Außenblech (110) und ein Innenblech (120), die gegenseitig miteinander verbunden sind, um eine dreidimensionale Struktur für die Tür (600) zu bilden, wobei die Bleche (110, 120) gegenseitig entlang einer unteren Kante (60, 310) der Tür (600) in einem oder mehreren Befestigungsbereichen (320) miteinander verbunden sind und die Bleche (110, 120) zwischen dem einen oder den mehreren Befestigungsbereichen (320) in einer im wesentlichen voneinander beabstandeten Weise angeordnet sind, um so eine oder mehrere längliche Abfluss- und Belüftungsöffnungen (325) in einem Bereich der unteren Kante (60, 310) zu bilden, wobei die eine oder die mehreren länglichen Öffnungen (325) eine kombinierte Länge in Längsrichtung aufweisen, die mehr als 50% einer Länge der unteren Kante (60, 310) der Tür (600) beträgt, **dadurch gekennzeichnet, dass** der eine oder die mehreren Befestigungsbereiche (320) an der unteren Kante (60, 310) jeweils lediglich als zwei ebene, aneinander anliegende Flächen ausgebildet sind, die gegenseitig das Außenblech (110) und das Innenblech (120) aneinander befestigen.

2. Eine Fahrzeugtür (600) nach Anspruch 1, wobei die eine oder mehreren längliche Öffnungen (325) eine kombinierte Länge in Längsrichtung aufweisen, die mehr als 75% einer Länge der unteren Kante (60, 310) der Tür (600) beträgt.

3. Eine Fahrzeugtür (600) nach Anspruch 1, wobei die eine oder mehreren längliche Öffnungen (325) eine kombinierte Länge in Längsrichtung aufweisen, die mehr als 90% einer Länge der unteren Kante (60, 310) der Tür (600) beträgt.

4. Eine Fahrzeugtür (600) nach einem der vorhergehenden Ansprüche, wobei sich das Innenblech (120) an der unteren Kante (60) um einen Abstand (350) über die untere Kante des Außenblechs (110) hinaus erstreckt, wenn sich die Tür (600) in ihrer Betriebs-Ausrichtung befindet.

5. Eine Fahrzeugtür (600) nach einem der vorhergehenden Ansprüche, wobei sich das Außenblech (110) an der unteren Kante (60) um einen Abstand (350) über die untere Kante des Innenblechs (120) hinaus erstreckt, wenn sich die Tür (600) in ihrer Betriebs-Ausrichtung befindet.

6. Eine Fahrzeugtür (600) nach einem der vorhergehenden Ansprüche, wobei die Bleche (110, 120) in dem einen oder den mehreren Befestigungsbereichen (320) gegenseitig durch eines oder mehrere der folgenden Verfahren aneinander befestigt sind: Löten, Hartlöten, Nieten, Kleben, Inertgasschweißen, Widerstandspunktschweißen, Laserschweißen, Schrauben, Klammern.

7. Eine Fahrzeugtür (600) nach einem der vorhergehenden Ansprüche, wobei der eine oder die mehreren Befestigungsbereiche (320) einen zusätzlichen Schutz gegen Korrosion umfassen, wobei dieser zusätzliche Schutz eines oder mehrere der folgenden umfasst:

(a) eine Zwischenlage, die zwischen die Bleche (110, 120) eingesetzt wird, wobei diese Zwischenlage eines oder mehrere der Folgenden umfasst: Zwischenlage aus Kunststoffmaterial, eine oder mehrere Schichten Klebefolie, eine oder mehrere Lagen aus synthetischem Gummi, die vorzugsweise kohlenstofffrei sind, eine oder mehrere Lagen aus inertem Material, und

(b) Aufbringen von speziellen klebenden Schutzbeschichtungen, Schutzlackbeschichtungen, galvanische Behandlungen wie etwas das Beschichten mit im wesentlichen inertem Metall, z.B. Vergolden.

8. Eine Fahrzeugtür (600) nach Anspruch 7, wobei die Zwischenlage (610) eine Dicke in einem Bereich von 0,5 mm bis 5 mm aufweist, bevorzugt in einem Bereich von 1 mm bis 3 mm.

9. Eine Fahrzeugtür (600) nach einem der vorhergehenden Ansprüche, wobei der eine oder die mehreren Befestigungsbereiche (320) so ausgebildet sind, dass sie eine obere Spitze (340) mit nach unten gerichteten Oberflächen (335) aufweisen, um Wasser im Betrieb von der Spitze (340) weg zu leiten.

10. Ein Verfahren zum Schaffen von Entwässerung und Belüftung in einem Bereich einer unteren Kante (60, 310) einer Fahrtzeugtür (600), wobei das Verfahren folgende Schritte umfasst:

(a) Herstellen eines Außenblechs (110) und eines Innenblechs (120), wobei die Bleche (110, 120) so ausgebildet sind, dass sie eine dreidimensionale Struktur für die Tür (600) bilden, wenn sie gegenseitig aneinander befestigt sind, und

(b) gegenseitiges Befestigen der Bleche (110, 120) aneinander entlang einer unteren Kante (60, 130) der Tür (600) an einem oder mehreren Befestigungsbereichen (320), wobei der eine oder die mehreren Befestigungsbereiche (320) an der unteren Kante (60, 310) jeweils lediglich als zwei ebene, aneinander anliegende Flächen ausgebildet sind, die gegenseitig das Außenblech (110) und das Innenblech (120) aneinander befestigen, so dass die Bleche (110, 120) zwischen dem einen oder den mehreren Befestigungsbereichen (320) in einer im wesentlichen voneinander beabstandeten Weise angeordnet sind, um so eine oder mehrere längliche Abfluss- und Belüftungsöffnungen (325) in einem Bereich der unteren Kante (60, 310) zu bilden, wobei die eine oder mehrere länglichen Öffnungen (325) eine kombinierte Länge in Längsrichtung aufweisen, die mehr als 50% einer Länge der unteren Kante (60, 310) der Tür (600) beträgt.

11. Ein Verfahren nach Anspruch 10, wobei die eine oder mehreren längliche Öffnungen eine kombinierte Länge in Längsrichtung aufweisen, die mehr als 75% einer Länge der unteren Kante (60, 310) der Tür (600) beträgt.

12. Ein Verfahren nach Anspruch 10, wobei die eine oder mehreren längliche Öffnungen eine kombinierte Länge in Längsrichtung aufweisen, die mehr als 90% einer Länge der unteren Kante (60, 310) der Tür (600) beträgt.

13. Ein Verfahren nach einem der Ansprüche 10 bis 12, wobei das Verfahren einen Schritt umfasst, die Bleche (110, 120) so zu fertigen, dass sich das Innenblech (120) in der Tür (600) an der unteren Kante (60) um einen Abstand (350) über die untere Kante des Außenblechs (110) hinaus erstreckt, wenn sich die Tür (600) in ihrer Betriebs-Ausrichtung befindet.

14. Ein Verfahren nach einem der Ansprüche 10 bis 12, wobei das Verfahren einen Schritt umfasst, die Bleche (110, 120) so zu fertigen, dass sich das Außenblech (110) in der Tür (600) an der unteren Kante (60) um einen Abstand (350) über die untere Kante des Innenblechs (120) hinaus erstreckt, wenn sich die Tür (600) in ihrer Betriebs-Ausrichtung befindet.

15. Ein Verfahren nach einem der Ansprüche 10 bis 14, wobei die Bleche (110, 120) in dem einen oder den mehreren Befestigungsbereichen (320) gegenseitig durch eines oder mehrere der folgenden Verfahren aneinander befestigt sind: Löten, Hartlöten, Nieten, Kleben, Inertgasschweißen, Widerstandspunktschweißen, Laserschweißen, Schrauben, Klammern.

16. Ein Verfahren nach einem der Ansprüche 10 bis 15, wobei der eine oder die mehreren Befestigungsbereiche (320) so ausgebildet sind, dass sie eine obere Spitze mit nach unten gerichteten Oberflächen aufweisen, um Wasser im Betrieb von der Spitze weg zu leiten.

17. Ein Verfahren nach Anspruch 15, wobei das Verfahren einen Schritt des Einbeziehens eines zusätzlichen Schutzes gegen Korrosion an dem einen oder den mehreren Befestigungsbereichen (320) umfasst, wobei dieser zusätzliche Schutz eines oder mehrere der folgenden umfasst:

(a) eine Zwischenlage, die zwischen die Bleche (110, 120) eingesetzt wird, wobei diese Zwischenlage eines oder mehrere der Folgenden umfasst: Zwischenlage aus Kunststoffmaterial, eine oder mehrere Schichten Klebefolie, eine oder mehrere Lagen aus synthetischem Gummi, die vorzugsweise kohlenstofffrei sind, eine oder mehrere Lagen aus inertem Material, und
(b) Aufbringen von speziellen klebenden Schutzbeschichtungen, Schutzlackbeschichtungen, galvanische Behandlungen wie etwas das Beschichten mit im wesentlichen inertem Metall, z.B. Vergolden.

18. Ein Fahrzeug, umfassend eine oder mehrere Türen (600) nach Anspruch 1, wobei die eine oder die mehreren Türen (600) in einem Verfahren nach Anspruch 10 gefertigt sind.

**Revendications**

1. Porte (600) de véhicule comprenant un panneau extérieur (110) et un panneau intérieur (120), lesdits panneaux (110, 120) étant adjoints l'un à l'autre pour former une structure tridimensionnelle pour la porte (600), les panneaux (110, 120) étant fixés ensemble le long d'un bord inférieur (60, 310) de ladite porte (600) au niveau d'une ou plusieurs zones de fixation (320), et lesdits panneaux (110, 120), entre lesdites une ou plusieurs zones de fixation (320), étant disposés de façon sensiblement espacée de manière à former une ou plusieurs ouvertures allongées (325) d'écoulement et de ventilation dans une zone dudit bord inférieur (60, 310), lesdites une ou plusieurs ouvertures allongées (325) ayant une longueur combinée qui est supérieure à 50 % d'une longueur dudit bord inférieur (60, 310) de ladite porte (600), *caractérisée en ce que* lesdites une ou plusieurs zones de fixation (320) sur ledit bord inférieur (60, 310) sont chacune mises en oeuvre uniquement sous forme de deux surfaces planes sensiblement en about fixant mutuellement entre eux ledit panneau extérieur (110) et ledit panneau intérieur (120).

2. Porte (600) de véhicule selon la revendication 1, dans laquelle lesdites une ou plusieurs ouvertures allongées (325) ont une longueur combinée qui est supérieure à 75 % d'une longueur dudit bord inférieur (60, 310) de ladite porte (600).

3. Porte (600) de véhicule selon la revendication 1, dans laquelle lesdites une ou plusieurs ouvertures allongées (325) ont une longueur combinée qui est supérieure à 90 % d'une longueur dudit bord inférieur (60, 310) de ladite porte (600).

4. Porte (600) de véhicule selon l'une quelconque des revendications précédentes, dans laquelle ledit panneau intérieur (120) s'étend vers le bas d'une distance (350) au niveau du bord inférieur (60) dépassant celle du panneau extérieur (110) lorsque ladite porte (600) est dans son orientation de service.

5. Porte (600) de véhicule selon l'une quelconque des revendications précédentes, dans laquelle ledit panneau extérieur (110) s'étend vers le bas d'une distance (350) au niveau du bord inférieur (60) dépassant celle du panneau intérieur (120) lorsque ladite porte (600) est dans son orientation de service.

6. Porte (600) de véhicule selon l'une quelconque des revendications précédentes, dans laquelle lesdits panneaux (110, 120) sont mutuellement fixés ensemble sur lesdites une ou plusieurs zones de fixation (320) par l'une ou plusieurs des techniques de : brasage tendre, brasage, rivetage, collage, soudage en atmosphère inerte, soudage par points par résistance, soudage laser, vissage, serrage.

7. Porte (600) de véhicule selon l'une quelconque des revendications précédentes, dans laquelle lesdites une ou plusieurs zones de fixation (320) comportent une protection supplémentaire contre la corrosion, ladite protection supplémentaire comprenant l'un ou plusieurs de :

(a) cale d'épaisseur insérée entre les panneaux (110, 120), cette cale d'épaisseur comprenant l'un ou plusieurs parmi : cale d'épaisseur en matière plastique, une ou plusieurs couches de feuilles adhésives, une ou plusieurs couches de caoutchouc synthétique qui sont, de manière préférée, essentiellement exemptes de carbone, une ou plusieurs couches de matériau inerte ; et
(b) application de revêtements protecteurs adhésifs spéciaux, couches de peinture protectrice, traitements d'électrodéposition tels que placage de métaux inertes, par exemple placage d'or.

8. Porte (600) de véhicule selon la revendication 7, dans laquelle ladite cale d'épaisseur (610) possède une épaisseur comprise entre 0,5 mm et 5 mm, de manière davantage préférée entre 1 mm et 3 mm.

9. Porte (600) de véhicule selon l'une quelconque des revendications précédentes, dans laquelle lesdites une ou plusieurs zones de fixation (320) sont formées de manière à fournir un sommet supérieur (340) avec des surfaces (335) dirigées vers le bas pour guider et éloigner l'eau du sommet (340) en utilisation.

10. Procédé pour assurer un écoulement et une ventilation dans une zone d'un bord inférieur (60, 310) d'une porte (600) de véhicule, ledit procédé comprenant les étapes de :

(a) fabrication d'un panneau extérieur (110) et d'un panneau intérieur (120), lesdits panneaux (110, 120), lorsqu'ils sont fixés entre eux, étant aptes à former une structure tridimensionnelle pour ladite porte (600) ; et
(b) fixation mutuelle ensemble desdits panneaux (110, 120) le long d'un bord inférieur (60, 130) de ladite porte (600) au niveau d'une ou plusieurs zones de fixation (320),

dans lequel lesdites une ou plusieurs zones de fixation (320) sur ledit bord inférieur (60, 310) sont chacune mises en oeuvre uniquement sous forme de deux surfaces planes sensiblement en about fixant mutuellement entre eux ledit panneau extérieur (110) et ledit panneau intérieur (120), de telle sorte que lesdits panneaux (110, 120) entre lesdites une ou plusieurs zones de fixation (320) soient disposés de façon sensiblement espacée de manière à former une ou plusieurs ouvertures allongées d'écoulement et de ventilation dans une zone dudit bord inférieur (60, 130), lesdites une ou plusieurs ouvertures allongées ayant une longueur combinée qui est supérieure à 50 % d'une longueur dudit bord inférieur (60, 310) de ladite porte (600).

11. Procédé selon la revendication 10, dans lequel lesdites une ou plusieurs ouvertures allongées ont une longueur combinée qui est supérieure à 75 % d'une longueur dudit bord inférieur (60, 130) de ladite porte (600).

12. Procédé selon la revendication 10, dans lequel lesdites une ou plusieurs ouvertures allongées ont une longueur combinée qui est supérieure à 90 % d'une longueur dudit bord inférieur (60, 130) de ladite porte (600).

13. Procédé selon l'une quelconque des revendications 10 à 12, ledit procédé comprenant une étape de fabrication desdits panneaux (110, 120) de telle sorte que ledit panneau intérieur (120) s'étende vers le bas d'une distance (350) au niveau du bord inférieur (60) dépassant celle du panneau extérieur (110) dans ladite porte (600) lorsque ladite porte (600) est dans son orientation de service.

14. Procédé selon l'une quelconque des revendications 10 à 12, ledit procédé comprenant une étape de fabrication desdits panneaux (110, 120) de telle sorte que ledit panneau extérieur (110) s'étende vers le bas d'une distance (350) au niveau du bord inférieur (60) dépassant celle du panneau intérieur (120) dans ladite porte (600) lorsque ladite porte (600) est dans son orientation de service.

15. Procédé selon l'une quelconque des revendications 10 à 14, dans lequel lesdits panneaux (110, 120) sont mutuellement fixés ensemble sur lesdites une ou plusieurs zones de fixation (320) par l'une ou plusieurs des techniques de : brasage tendre, brasage, rivetage, collage, soudage en atmosphère inerte, soudage par points par résistance, soudage laser, vissage, serrage.

16. Procédé selon l'une quelconque des revendications 10 à 15, dans lequel lesdites une ou plusieurs zones de fixation (320) sont formées de manière à fournir un sommet supérieur avec des surfaces dirigées vers le bas pour guider et éloigner l'eau du sommet en utilisation.

17. Procédé selon la revendication 15, dans lequel ledit procédé comprend une étape incluant une protection supplémentaire contre la corrosion sur lesdites une ou plusieurs zones de fixation (320), ladite protection supplémentaire comprenant l'un ou plusieurs de :

> (a) cale d'épaisseur insérée entre les panneaux (110, 120), cette cale d'épaisseur comprenant l'un ou plusieurs parmi : cale d'épaisseur en matière plastique, une ou plusieurs couches de feuilles adhésives, une ou plusieurs couches de caoutchouc synthétique qui sont, de manière préférée, essentiellement exemptes de carbone, une ou plusieurs couches de matériau inerte ; et
> (b) application de revêtements protecteurs adhésifs spéciaux, couches de peinture protectrice, traitements d'électrodéposition tels que placage de métaux inertes, par exemple placage d'or.

18. Véhicule comprenant une ou plusieurs portes (600) selon la revendication 1, lesdites une ou plusieurs portes (600) étant fabriquées selon un procédé tel que revendiqué dans la revendication 10.

FIG. 1

FIG. 2a

FIG. 2b

FIG. 3

FIG. 4

FIG. 5

FIG. 6

EP 1 930 194 B1

320    320    320

20

60   550   550   560   550   550

**FIG. 7**

320  580  340  550

120  610

60

110

350

120

600

110  120

335

580  340

610

**FIG. 8**

17

**EP 1 930 194 B1**

**REFERENCES CITED IN THE DESCRIPTION**

**Patent documents cited in the description**

- US 20030067187 A
- DE 102005016916
- US 6412852 B
- JP 60248429 B